# EUROPEAN PATENT APPLICATION

(11) **EP 4 810 302 A1**
(43) Date of publication of application: **23.09.2026**
(21) Application number: 24890198.5
(22) Date of filing: 02.08.2024
(51) Int. Cl.: B60L 53/10, B60L 58/13

(54) **VEHICLE CONTROL METHOD AND APPARATUS, AND CHARGING DEVICE CONTROL METHOD AND APPARATUS**

(30) Priority: 14.11.2023 CN 202311515317
(71) Applicant: Contemporary Amperex Technology Co., Limited, Ningde, Fujian 352100 (CN)
(72) Inventor: YAN, Yu, Ningde, Fujian 352100 (CN); HUANG, Xiaojian, Ningde, Fujian 352100 (CN); CHEN, Xing, Ningde, Fujian 352100 (CN); WANG, Kexin, Ningde, Fujian 352100 (CN)
(74) Representative: Ran, Handong
(86) International application number: PCT/CN2024/109526
(87) International publication number: WO 2025/102834

(57) **Abstract**

A vehicle control method and a charging device control method. The vehicle control method comprises: when a vehicle is physically connected to a charging device, controlling an electrical device to be electrically connected to the charging device, such that the charging device supplies power to the electrical device; and controlling electrical connection between a power battery and the charging device to be disconnected. The charging device control method comprises: receiving third state information of a vehicle, the third state information of the vehicle being used for indicating that the vehicle is in a heating ready state; and causing a charging device to be electrically connected to an electrical device, and sending second state information of the charging device to the vehicle, the second state information of the charging device being used for indicating that the charging device is in a heating ready state. The control methods increase application scenarios of charging devices so as to enable power energy of charging devices to be flexibly used, and also allow for subsequent implementation of a heating function for power batteries.

## Description

### CROSS-REFERENCE

The present application claims priorities to Chinese Patent Application No. 202311515317.4 filed on November 14, 2023 and entitled "CONTROL METHOD AND APPARATUS FOR VEHICLE, AND CONTROL METHOD AND APPARATUS FOR CHARGING DEVICE", which is incorporated herein by reference in its entirety.

### TECHNICAL FIELD

The present application relates to the field of battery technologies, and more particularly, to a control method and control apparatus for a vehicle, a control method and control apparatus for a charging device, a computing device, a vehicle, a charging device, a computer-readable storage medium, and a computer program product.

### BACKGROUND

Energy conservation and emission reduction are key to the sustainable development of the automotive industry. Electric vehicles, due to their advantages in energy conservation and environmental protection, have become an important component of the sustainable development of the automotive industry. Battery technology is a critical factor in the development of electric vehicles.

Electric vehicles are equipped with numerous electric devices. During the operation of an electric vehicle, a power battery in the vehicle typically supplies power to an electric device. When the power battery's power is insufficient, a charging device such as a charging pile can be used to charge the power battery. The charging device is generally connected to the grid or an energy storage device, capable of providing sufficient electrical energy. However, after being connected to the vehicle, the charging device is typically only used to charge the power battery in the vehicle and cannot flexibly utilize the electrical energy of the charging device.

### SUMMARY

The present application aims to at least address one of the technical problems existing in the background. To this end, embodiments of the present application provide a control method and control apparatus for a vehicle, a control method and control apparatus for a charging device, a computing device, a vehicle, a charging device, a computer-readable storage medium, and a computer program product to mitigate, alleviate, or eliminate issues in the related art.

An embodiment of a first aspect of the present application provides a control method for a vehicle, where the vehicle includes a power battery and an electric device, and the method includes: in a case that the vehicle is physically connected to a charging device: controlling the electric device to be electrically connected to the charging device, so that the charging device supplies power to the electric device; and controlling an electrical connection between the power battery and the charging device to be disconnected.

In the technical solution of the embodiment of the present application, by electrically connecting the charging device to the electric device in the vehicle while the charging device is physically connected to the vehicle, and disconnecting the electrical connection between the charging device and the power battery, the charging device supplies power to the electric device before charging the power battery, thereby expanding the application scenarios of the charging device and enabling flexible utilization of the electrical energy of the charging device.

In some embodiments, the vehicle further includes a bypass module, and the bypass module is configured to connect or disconnect the electric device to or from the charging device. By providing the bypass module in the vehicle, the electric device can be connected to or disconnected from the charging device using the bypass module, enabling the charging device to supply power to the electric device based on usage requirements.

In some embodiments, in a case that the electric device is electrically connected to the charging device, an electrical connection between the electric device and the power battery is disconnected. By disconnecting the electrical connection between the electric device and the power battery, the charging device can supply power to the electric device while isolating the charging device from the power battery, reducing the impact on the charging device.

In some embodiments, the controlling an electrical connection between the power battery and the charging device to be disconnected includes: in a case that the electric device is electrically connected to the charging device, controlling the electrical connection between the power battery and the charging device to be disconnected. Disconnecting the electrical connection between the power battery and the charging device after the electric device is electrically connected to the charging device ensures that the charging device is always connected to a load, avoiding a no-load condition and reducing damage to the charging device.

In some embodiments, the vehicle further includes an electric energy module, and the control method further includes: after the controlling an electrical connection between the power battery and the charging device to be disconnected, making the electric energy module apply a current to the power battery to heat the power battery. When the ambient temperature is low, the power battery may be too cold to be charged, requiring the electric energy module to heat the power battery. At this time, the charging device is electrically connected to the electric device and electrically disconnected from the power battery, reducing the impact of the current generated by the electric energy module on the charging device. Moreover, while maintaining the physical connection between the charging device and the vehicle, the power battery can be heated and then charged without waiting for the battery heating to complete before physically connecting the charging device to the vehicle for charging, significantly reducing the complexity of the entire charging process.

In some embodiments, the vehicle further includes a first switch module, the first switch module is configured to electrically connect the power battery to the charging device, and the controlling an electrical connection between the power battery and the charging device to be disconnected includes: causing the first switch module to be disconnected. By controlling the first switch module to be turned off, the electrical connection between the power battery and the charging device can be disconnected while maintaining the physical connection between the charging device and the vehicle.

In some embodiments, the first switch module includes a first switch and a second switch, the first switch and the second switch are respectively electrically connected to a positive electrode and a negative electrode of the power battery, and the controlling an electrical connection between the power battery and the charging device to be disconnected includes: causing at least one of the first switch and the second switch to be turned off. By providing a switch at each of the positive and negative electrodes of the power battery, turning off only one of them is sufficient to disconnect the electrical connection between the power battery and the charging device.

In some embodiments, the vehicle further includes an on-board insulation detection apparatus, and during a period when the electric device is electrically connected to the charging device, an electrical connection between the on-board insulation detection apparatus and a power supply circuit through which the charging device supplies power to the electric device is disconnected. During the period when the charging device supplies power to the electric device, the insulation detection apparatus of the vehicle can be disconnected from the power supply circuit.

In some embodiments, the controlling the electric device to be electrically connected to the charging device includes: in response to an outer side voltage of the first switch module being less than a first voltage threshold, causing the electric device to be electrically connected to the charging device via the bypass module. Electrically connecting the electric device to the charging device via the bypass module only when the outer side voltage of the first switch module is less than the first voltage threshold reduces the risk of vehicle failure due to excessively high outer side voltage, improving operational reliability and safety.

In some embodiments, the first voltage threshold is 60 V. By setting an appropriate first voltage threshold, operational safety can be improved.

In some embodiments, the control method further includes: before the controlling the electric device to be electrically connected to the charging device, receiving charging device first state information from the charging device; and in response to receiving the charging device first state information, sending vehicle first state information to the charging device. Before controlling the electric device to be electrically connected to the charging device, the vehicle and the charging device exchange communication handshake messages to confirm that the states of the vehicle and the charging device are normal before electrically connecting the electric device to the charging device, improving reliability.

In some embodiments, the control method further includes: after the controlling an electrical connection between the power battery and the charging device to be disconnected, controlling the power battery to be electrically connected to the charging device; and using the charging device to charge the power battery. When the power battery does not meet charging conditions, the electrical connection between the power battery and the charging device needs to be disconnected, and the power battery is heated. When the power battery meets charging conditions, the electrical connection between the power battery and the charging device is restored, allowing the charging device to start charging the power battery. This enables charging the battery after heating without disconnecting the physical connection between the charging device and the vehicle (for example, without unplugging the vehicle plug of the charging device from the vehicle socket of the vehicle), significantly reducing the complexity of the entire charging process.

In some embodiments, the control method further includes: in response to a heating stop instruction, causing the electric energy module to stop applying the current to the power battery. When the vehicle or the charging device indicates that heating of the power battery should stop, the electric energy module stops applying the current to the power battery to cease heating, thereby enabling the next operational phase to begin as soon as possible, improving operational efficiency.

In some embodiments, the control method further includes: after causing the electric energy module to stop applying the current to the power battery, sending vehicle second state information to the charging device. After heating of the power battery is completed, sending the vehicle second state information to the charging device allows reporting the current state of the vehicle to the charging device (for example, after heating is completed, the vehicle is in the ready state, it is ready to enter the next phase).

In some embodiments, the electric energy module includes at least one of an energy storage module and a motor control module. The power battery can be heated using the energy storage module or the power battery can be heated using the motor control module of the vehicle.

In some embodiments, the bypass module includes at least one of a switch and a wire. The bypass module can be designed based on use status, improving adaptability to various use scenarios.

In some embodiments, the bypass module includes any one of the following: a third switch configured to be electrically connected to a positive electrode of the charging device and a fourth switch configured to be electrically connected to a negative electrode of the charging device; a fifth switch configured to be electrically connected to the positive electrode of the charging device and a first wire configured to be electrically connected to the negative electrode of the charging device; a second wire configured to be electrically connected to the positive electrode of the charging device and a sixth switch configured to be electrically connected to the negative electrode of the charging device; a seventh switch configured to be electrically connected to the positive electrode of the charging device; an eighth switch configured to be electrically connected to the negative electrode of the charging device; a third wire configured to be electrically connected to the positive electrode of the charging device; and a fourth wire configured to be electrically connected to the negative electrode of the charging device. The bypass module can be implemented using two switches, one switch, a wire, or a combination of a switch and a wire, allowing flexible selection based on use scenarios.

In some embodiments, the electric device includes at least one of the following: an air conditioner compressor, a power converter, a heating film, a heat pump, and a positive temperature coefficient thermistor. The charging device can supply power to electric devices in the vehicle that require power. In some cases (for example, where the electric device is a heating film, a heat pump, or a positive temperature coefficient thermistor), the electric device can also assist in heating the power battery, thereby reducing heating time.

An embodiment of a second aspect of the present application provides a control method for a charging device, where the charging device is configured to charge a vehicle, the vehicle includes a power battery and an electric device, and the control method including: receiving vehicle third state information, where the vehicle third state information is used for indicating that the vehicle is in a heating-ready state; and causing the charging device to be electrically connected to the electric device, and sending charging device second state information to the vehicle, where the charging device second state information is used for indicating that the charging device is in a heating-ready state.

After receiving the vehicle third state information sent by the vehicle and indicating that the vehicle is heating-ready, the charging device is electrically connected to the electric device and sends the charging device second state information indicating that the charging device is heating-ready to the vehicle. Thus, through communication interaction between the charging device and the vehicle, the states of the charging device and the vehicle are confirmed, expanding the application scenarios of the charging device, enabling flexible utilization of the electrical energy of the charging device, and allowing subsequent implementation of the heating function for the power battery.

In some embodiments, the control method further includes: before the receiving the vehicle third state information, sending charging device first state information to the vehicle. The heating process is initiated by the charging device, which sends the charging device first state information to the vehicle.

In some embodiments, the control method further includes: receiving vehicle fourth state information, where the vehicle fourth state information is used for indicating a power supply demand of the vehicle; and in response to receiving the vehicle fourth state information, stopping sending the charging device first state information to the vehicle. After the state information of the charging device changes to ready, receiving the power supply demand from the vehicle and stopping sending the charging device first state information to the vehicle.

In some embodiments, the control method further includes: after the stopping sending the charging device first state information to the vehicle, sending charging device third state information and charging device fourth state information to the vehicle, where the charging device third state information is used for indicating an output capability of the charging device, and the charging device fourth state information is used for indicating basic charging and heating information of the charging device. After stopping sending the charging device first state information, sending the charging device third state information indicating the output capability of the charging device and the charging device fourth state information indicating basic charging and heating information of the charging device to the vehicle improves the reliability of the heating process.

In some embodiments, the control method further includes: receiving vehicle fifth state information, where the vehicle fifth state information is used for indicating that heating of the power battery is completed; and in response to receiving the vehicle fifth state information, stopping sending the charging device third state information to the vehicle. After heating of the power battery is completed, the charging device stops sending the charging device third state information indicating the output capability of the charging device to the vehicle.

In some embodiments, the control method further includes: before the receiving the vehicle fifth state information, outputting, by the charging device, an output voltage corresponding to a power supply voltage demand value of the vehicle. By outputting a voltage based on the power supply voltage demand value of the vehicle, the stability of the power supply process can be improved.

In some embodiments, the control method further includes: before the receiving the vehicle fifth state information, outputting, by the charging device, an output current not exceeding a current maximum power supply current demand value of the vehicle. By ensuring that the output current of the charging device does not exceed the current maximum power supply current demand value of the vehicle, the reliability of the power supply process can be improved.

In some embodiments, the control method further includes: after the receiving the vehicle fifth state information, controlling an electrical connection between the charging device and the electric device to be disconnected; and sending charging device fifth state information to the vehicle. After receiving the vehicle fifth state information indicating that heating of the power battery is completed, disconnecting the electrical connection between the charging device and the electric device and sending the charging device fifth state information indicating that the electrical connection between the charging device and the electric device is disconnected to the vehicle, so as to prepare for the next phase.

In some embodiments, the control method further includes: monitoring an insulation resistance between a power supply circuit through which the charging device supplies power to the electric device and a device ground. During the heating phase, the charging device performs insulation monitoring.

In some embodiments, the charging device further includes a discharge circuit, and the control method further includes: before the sending charging device fifth state information to the vehicle, controlling the discharge circuit to perform discharging. After the heating process ends, using the discharge circuit to discharge residual electricity improves the safety and reliability of the charging device.

In some embodiments, the control method further includes: receiving vehicle second state information, where the vehicle second state information is used for indicating that the vehicle is in a charging-ready state. When the vehicle permits charging, the second state information is sent to the charging device, allowing the charging device to start charging the power battery.

In some embodiments, the charging device includes a second switch module, where the second switch module is configured to electrically connect the charging device to the electric device, and the causing the charging device to be electrically connected to the electric device includes: causing the second switch module to be turned on. By providing the second switch module within the charging device, the electrical connection between the charging device and the power battery can be controlled from the charging device side.

An embodiment of a third aspect of the present application provides a control apparatus for a vehicle, where the vehicle includes a power battery and an electric device, and the control apparatus includes: a first module configured to, in a case that the vehicle is physically connected to a charging device, control the electric device to be electrically connected to the charging device, where the charging device supplies power to the electric device; and a second module configured to, in a case that the vehicle is physically connected to the charging device, control an electrical connection between the power battery and the charging device to be disconnected.

An embodiment of a fourth aspect of the present application provides a control apparatus for a charging device, where the charging device is configured to charge a vehicle, the vehicle includes a power battery and an electric device, and the control apparatus includes: a third module configured to receive vehicle third state information, where the vehicle third state information is used for indicating that the vehicle is in a heating-ready state; and a fourth module configured to cause the charging device to be electrically connected to the electric device and send charging device second state information to the vehicle, where the charging device second state information is used for indicating that the charging device is in a heating-ready state.

An embodiment of a fifth aspect of the present application provides a computing device including: at least one processor; and at least one memory communicatively connected to the at least one processor, where the at least one memory stores an instruction, and when the instruction is executed individually or collectively by the at least one processor, the computing device is made to perform the method according to any one of the above embodiments.

An embodiment of a sixth aspect of the present application provides a vehicle including: a power battery, an electric device, and the control apparatus of the vehicle according to the above embodiment or the computing device according to the above embodiment.

An embodiment of a seventh aspect of the present application provides a charging device. The charging device is configured to charge a vehicle, where the vehicle includes a power battery and an electric device, and the charging device includes: the control apparatus according to the above embodiment or the computing device according to the above embodiment.

An embodiment of an eighth aspect of the present application provides a computer-readable storage medium storing an instruction, and when the instruction is executed individually or collectively by one or more processors of a computing device, the computing device is made to perform the method according to any one of the above embodiments.

An embodiment of a ninth aspect of the present application provides a computer program product including an instruction, and when the instruction is executed individually or collectively by one or more processors of a computing device, the computing device is made to perform the method according to any one of the above embodiments.

The above description is only an overview of the technical solutions of the present application. To provide a clearer understanding of the technical means of the present application, the content of the specification can be implemented, and to make the above and other objectives, features, and advantages of the present application more apparent and understandable, specific embodiments of the present application are provided below.

### BRIEF DESCRIPTION OF DRAWINGS

To more clearly illustrate the technical solutions of the embodiments of the present application, the drawings required for use in the embodiments of the present application will be briefly described below. It is apparent that the drawings described below are only some embodiments of the present application, and those of ordinary skill in the art can obtain other drawings based on these drawings without creative effort.

In the drawings, unless otherwise specified, identical reference signs throughout multiple drawings indicate identical or similar components or elements. These drawings are not necessarily drawn to scale. It should be understood that these drawings depict only some embodiments disclosed in accordance with the present application and should not be considered as limiting the scope of the present application.
FIG. 1 is an example block diagram of a connection relationship between a charging device and a vehicle according to some embodiments of the present application.
FIG. 2 is a schematic flowchart of a control method for a vehicle according to some embodiments of the present application.
FIG. 3 is a schematic flowchart of a handshake process between a vehicle and a charging device according to some embodiments of the present application.
FIG. 4 is a schematic flowchart of starting charging after heating is completed according to some embodiments of the present application.
FIG. 5 is a schematic flowchart of a control method for a charging device according to some embodiments of the present application.
FIG. 6 is a schematic flowchart of a control method for a charging device according to some embodiments of the present application.
FIG. 7 is a schematic flowchart of a control method for a charging device according to some embodiments of the present application.
FIG. 8 is a schematic flowchart of a control method for a charging device according to some embodiments of the present application.
FIG. 9 is an example block diagram of a control apparatus for a vehicle according to some embodiments of the present application.
FIG. 10 is an example block diagram of a control apparatus for a charging device according to some embodiments of the present application.
FIG. 11 is a block diagram of an example computing device applicable to example embodiments.
FIG. 12 is a schematic flowchart of an interaction process between a vehicle and a charging device according to some embodiments of the present application.

### DESCRIPTION OF EMBODIMENTS

The embodiments of the technical solutions of the present application will be described in detail below with reference to the drawings. The following embodiments are only used to more clearly illustrate the technical solutions of the present application and are therefore only example and cannot be used to limit the scope of protection of the present application.

Unless otherwise defined, all technical and scientific terms used herein have the same meaning as commonly understood by those skilled in the technical field of the present application; the terms used herein are for the purpose of describing specific embodiments only and are not intended to limit the present application; the terms "include" and "have" and any variations thereof in the specification, claims, and the above description of the drawings of the present application are intended to cover non-exclusive inclusion.

In the description of the embodiments of the present application, technical terms such as "first" and "second" are used only to distinguish different objects and should not be understood as indicating or implying relative importance or implicitly indicating the number, specific order, or primary-secondary relationship of the indicated technical features. In the description of the embodiments of the present application, "multiple" means two or more, unless otherwise explicitly and specifically defined.

Reference to "embodiment" herein means that a specific feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the description of the embodiments of the present application, the term "and/or" merely describes an association relationship of associated objects, indicating that three relationships may exist, for example, A and/or B may indicate: A alone, A and B simultaneously, and B alone. Additionally, the character "/" herein generally indicates an "or" relationship between the associated objects before and after.

In the description of the embodiments of the present application, the term "multiple" refers to two or more (including two), similarly, "multiple groups" refers to two or more groups (including two groups), and "multiple pieces" refers to two or more pieces (including two pieces).

In the description of the embodiments of the present application, technical terms such as "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations or positional relationships based on the orientations or positional relationships shown in the drawings, and are only for the convenience of describing the embodiments of the present application and simplifying the description, rather than indicating or implying that the referred device or element must have a specific orientation, be constructed and operated in a specific orientation, and therefore should not be construed as limiting the embodiments of the present application.

In the description of the embodiments of the present application, unless otherwise explicitly specified and limited, technical terms such as "install," "connect," "connection," "fix," and the like should be understood in a broad sense, for example, it may be a fixed connection, a detachable connection, or an integral connection; it may be a mechanical connection or an electrical connection; it may be a direct connection or an indirect connection through an intermediary, or it may be an internal communication between two elements or an interaction relationship between two elements. Those of ordinary skill in the art can understand the specific meanings of the above terms in the embodiments of the present application according to specific circumstances.

Currently, from the perspective of market development, the application of power batteries is becoming increasingly widespread. Power batteries are not only used in energy storage systems such as hydropower, thermal power, wind power, and solar power plants, but also widely applied in electric vehicles such as electric bicycles, electric motorcycles, and electric cars, as well as in military equipment, aerospace, and other fields. With the continuous expansion of the application fields of power batteries, their market demand is also continuously increasing.

Electric vehicles are equipped with numerous electric devices. During the operation of an electric vehicle, the power battery in the vehicle typically supplies power to these electric devices. When the power battery's charge is insufficient, a charging device such as a charging pile can be used to charge the power battery. However, after being connected to the vehicle, the charging device is generally only used to charge the power battery in the electric vehicle and does not supply power to the electric devices in the electric vehicle. This limits the application scenarios of the charging device, preventing flexible utilization of the electrical energy of the charging device.

Therefore, there is a need for a control method that enables the charging device to supply power to the electric devices in the vehicle before charging the power battery, thereby expanding the application scenarios of the charging device.

The control method disclosed in the embodiments of the present application can be, but is not limited to, used in the charging process of vehicles, ships, or aircraft. According to the control method disclosed in the embodiments of the present application, the charging device can supply power to the electric devices in the object to be charged (for example, a vehicle) before charging.

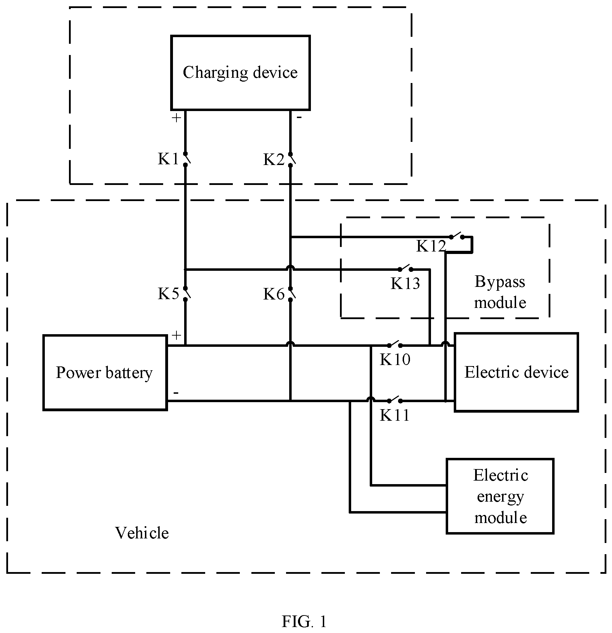

FIG. 1 is an example block diagram of a connection relationship between a charging device and a vehicle according to some embodiments of the present application. In the description of more embodiments below, for convenience, reference will be made to FIG. 1.

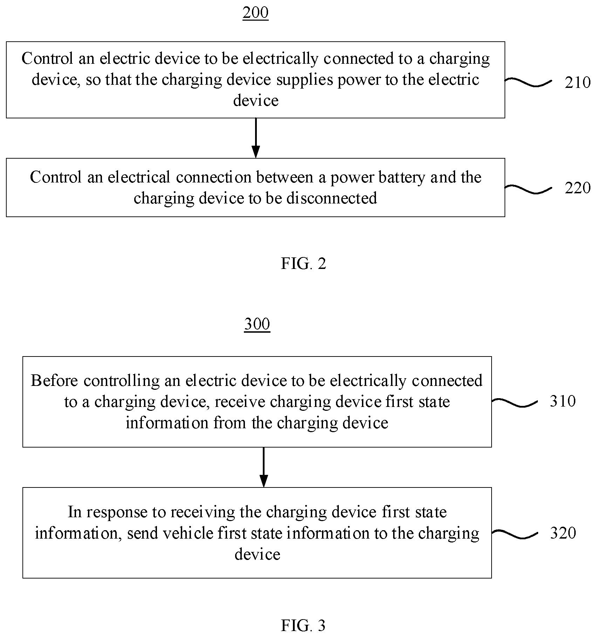

An embodiment of the present application provides a control method 200 for a vehicle, where the vehicle includes a power battery and an electric device. Referring to FIG. 2, the control method 200 includes:
In a case that the vehicle is physically connected to a charging device:
Step 210: Control the electric device to be electrically connected to the charging device, so that the charging device supplies power to the electric device.
Step 220: Control an electrical connection between the power battery and the charging device to be disconnected.

Herein, the term "charging device" may include an off-board conductive charger (which may be referred to as an off-board charger or charger). The phrase "the vehicle is physically connected to the charging device" may refer to inserting a vehicle plug of the charging device into a vehicle socket of the vehicle.

It should be understood that the physical connection between the vehicle and the charging device does not necessarily mean that the power battery is electrically connected to the charging device. In some embodiments, as shown in FIG. 1, switches K5 and K6 are provided on the vehicle side, and switches K1 and K2 are provided on the charging device side. After the vehicle plug is inserted into the vehicle socket, switches K1, K2, K5, and K6 are turned on to electrically connect the power battery to the charging device. The vehicle side is also provided with switches K12 and K13, and when switches K12 and K13 are turned on, the electric device is electrically connected to the charging device.

If in certain situations (for example, when the ambient temperature is low), the state of the power battery does not permit charging, switches K12 and K13 can be turned on to electrically connect the electric device in the vehicle to the charging device, enabling the charging device to supply power to the electric device. Additionally, switches K5 and/or K6 can be turned off to disconnect the electrical connection between the power battery and the charging device, so that the charging device does not charge the power battery.

By electrically connecting the charging device to the electric device in the vehicle while the charging device is physically connected to the vehicle and disconnecting the electrical connection between the charging device and the power battery, the charging device supplies power to the electric device before charging the power battery, expanding the application scenarios of the charging device and enabling flexible utilization of the electrical energy of the charging device.

In certain application scenarios, this further provides additional benefits. For example, when the state of the power battery does not permit charging (for example, due to low temperature), additional operations (for example, electrical heating) may be required to make the power battery meet charging conditions. These additional operations may cause current or voltage fluctuations in the charging circuit, potentially damaging the charging device or even the grid. By disconnecting the electrical connection between the power battery and the charging device, these additional operations (for example, electrical heating) can be completed while maintaining the physical connection between the vehicle and the charging device without causing damage to the charging device.

According to some embodiments of the present application, the vehicle further includes a bypass module, where the bypass module is configured to connect or disconnect the electric device to or from the charging device.

Herein, the term "bypass module" refers to a device that can control the connection or disconnection of the electrical connection between the electric device and the charging device. When the bypass module is turned on, the electric device is electrically connected to the charging device, and the charging device supplies power to the electric device.

In some embodiments, the bypass module may take the form of a bypass circuit. There is at least one electrical connection point between the vehicle interface and switches K5 and K6, and this connection point is connected to a vehicle-side switch to form a bypass circuit. In the example shown in FIG. 1, the bypass circuit includes switches K12 and K13.

By providing the bypass module in the vehicle, the electric device can be connected to or disconnected from the charging device using the bypass module, enabling the charging device to supply power to the electric device based on usage requirements. When power supply from the charging device to the electric device is not needed, the electrical connection between the charging device and the electric device can be disconnected.

According to some embodiments of the present application, in a case that the electric device is electrically connected to the charging device, an electrical connection between the electric device and the power battery is disconnected.

A disconnection device is provided in the circuit between the electric device and the power battery. When the vehicle is not connected to the charging device, the electric device in the vehicle is powered by the power battery. During the period when the electric device is electrically connected to the charging device, the electrical connection between the electric device and the power battery is disconnected via the disconnection device, so that the power battery does not supply power to the electric device, and the charging device supplies power to the electric device instead.

By disconnecting the electrical connection between the electric device and the power battery, the charging device can independently supply power to the on-board electric device, isolating the power battery from the charging device circuit and reducing the impact on the charging device during the power battery heating process.

According to some embodiments of the present application, step 220 includes:
in a case that the electric device is electrically connected to the charging device, controlling the electrical connection between the power battery and the charging device to be disconnected.

After the charging device is inserted into the vehicle, the power battery of the vehicle is electrically connected to the charging device, and the power battery can be considered as the load of the charging device. The electric device is controlled to be electrically connected to the charging device, and in a case that the electric device is electrically connected to the charging device, the electrical connection between the power battery and the charging device is disconnected, at which point the electric device can be considered as the load of the charging device.

In the example shown in FIG. 1, when switches K12 and K13 are both turned on, switches K5 and/or K6 are turned off.

By disconnecting the electrical connection between the power battery and the charging device after the electric device is electrically connected to the charging device, the charging device is always connected to a load, avoiding a no-load condition, reducing damage to the charging device, and improving the safety and reliability of the charging device.

According to some embodiments of the present application, the vehicle further includes an electric energy module, and after step 220, the control method 200 further includes:
after the controlling an electrical connection between the power battery and the charging device to be disconnected, making the electric energy module apply a current to the power battery to heat the power battery.

Herein, the term "electric energy module" refers to a module capable of applying a current across the battery, where applying a current to the battery may involve applying a positive current and/or a negative current. In one example, the current may be in the form of a pulse current.

When the ambient temperature is low, the power battery may be too cold to be charged, and the electric energy module can be used to heat the power battery. After controlling the electrical connection between the power battery and the charging device to be disconnected, the electric energy module begins to apply a current to the power battery. Due to the internal resistance of the power battery, heat is generated when the current flows through the power battery, thereby heating the power battery.

The heating process of the power battery may cause significant voltage fluctuations, and if the electrical connection between the power battery and the charging device is not disconnected, it may cause significant impact on the charging device (for example, the reverse charging current of the power battery may trigger an abnormal alarm in the charging device). In such cases, it is often necessary to disconnect the physical connection between the charging device and the vehicle (for example, by unplugging the vehicle plug of the charging device from the vehicle socket of the vehicle). After heating is completed, re-establishing the physical connection between the charging device and the vehicle (for example, by inserting the vehicle plug of the charging device into the vehicle socket of the vehicle) is required for charging, which makes the operation cumbersome.

According to the embodiments of the present disclosure, after disconnecting the electrical connection between the power battery and the charging device, the electric energy module applies a current to the power battery. Since the charging device and the heating circuit of the power battery are isolated at this time, the impact of the heating process on the charging device can be reduced. Moreover, there is no need to disconnect the physical connection between the charging device and the vehicle during the heating process, enabling the battery to be heated and then charged while maintaining the physical connection between the charging device and the vehicle, without waiting for the battery heating to complete before physically connecting the charging device to the vehicle for charging. This significantly reduces the complexity of the entire charging process.

According to some embodiments of the present application, the vehicle further includes a first switch module, the first switch module is configured to electrically connect the power battery to the charging device, and step 220 includes: causing the first switch module to be turned off.

In the charging circuit from the charging device to the power battery, a first switch module is provided on the vehicle side. When the first switch module is turned off, the electrical connection between the power battery and the charging device is disconnected.

By controlling the first switch module to be turned off, the electrical connection between the power battery and the charging device can be disconnected while maintaining the physical connection between the charging device and the vehicle.

According to some embodiments of the present application, the first switch module includes a first switch and a second switch, the first switch and the second switch are respectively electrically connected to a positive electrode and a negative electrode of the power battery, and step 220 includes: causing at least one of the first switch and the second switch to be turned off.

In the charging circuit from the charging device to the power battery, a switch is provided at each of the positive and negative electrodes of the power battery, and the connection or disconnection of the two switches can be controlled independently. In the example shown in FIG. 1, the first switch module includes a first switch K5 and a second switch K6, respectively electrically connected to the positive and negative electrodes of the power battery.

By providing a switch at each of the positive and negative electrodes of the power battery, they can be controlled independently, and turning off only one of the switches is sufficient to disconnect the electrical connection between the power battery and the charging device, improving the safety of the charging system while making the operation more convenient.

According to some embodiments of the present application, the vehicle further includes an on-board insulation detection apparatus, and during a period when the electric device is electrically connected to the charging device, an electrical connection between the on-board insulation detection apparatus and a power supply circuit through which the charging device supplies power to the electric device is disconnected.

Herein, the term "insulation detection apparatus of vehicle" refers to a device provided on the vehicle side with insulation detection functionality. During the period when the electric device is electrically connected to the charging device, since the electric energy module may be heating the power battery, the insulation detection apparatus of vehicle needs to be disconnected from the power supply circuit, and insulation detection is performed by the charging device.

During the period when the charging device supplies power to the electric device, the insulation detection apparatus of vehicle can be disconnected from the power supply circuit to avoid interfering with the power supply from the charging device to the electric device.

According to some embodiments of the present application, step 210 includes:
in response to an outer side voltage of the first switch module being less than a first voltage threshold, causing the electric device to be electrically connected to the charging device via the bypass module.

Herein, for a switch module on the vehicle side, the term "outer side" refers to the end of the switch module that is electrically farther from the power battery, and "outer side voltage" refers to the voltage at the end of the switch module that is electrically farther from the power battery; for a switch module on the charging device side, the term "outer side" refers to the end of the switch module that is electrically farther from the charging power source, and "outer side voltage" refers to the voltage at the end of the switch module that is electrically farther from the charging power source. In the example shown in FIG. 1, when the outer side voltages of switches K5 and K6 are less than the first voltage threshold, the electric device is electrically connected to the charging device by turning on switches K12 and K13.

By electrically connecting the electric device to the charging device via the bypass module only when the outer side voltage of the first switch module is less than the first voltage threshold, the risk of vehicle failure due to excessively high outer side voltage is reduced, improving operational reliability and safety.

According to some embodiments of the present application, the first voltage threshold is 60 V.

Setting 60 V as the voltage threshold ensures that the current flowing through the human body in case of accidental contact does not exceed the allowable safe current, improving operational safety.

According to some embodiments of the present application, before step 210, the control method 200 further includes a process 300. Referring to FIG. 3, the process 300 includes:
Step 310: Before the controlling an electric device to be electrically connected to the charging device, receive charging device first state information from the charging device.
Step 320: In response to receiving the charging device first state information, send vehicle first state information to the charging device.

Before the electric device is electrically connected to the charging device, the charging device sends the charging device first state information to the vehicle. In one example, after receiving the charging device first state information, the vehicle periodically sends the vehicle first state information to the charging device.

Before controlling the electric device to be electrically connected to the charging device, the vehicle and the charging device exchange communication handshake messages to confirm that the states of the vehicle and the charging device are normal before electrically connecting the power battery to the charging device, improving the reliability of the power supply process.

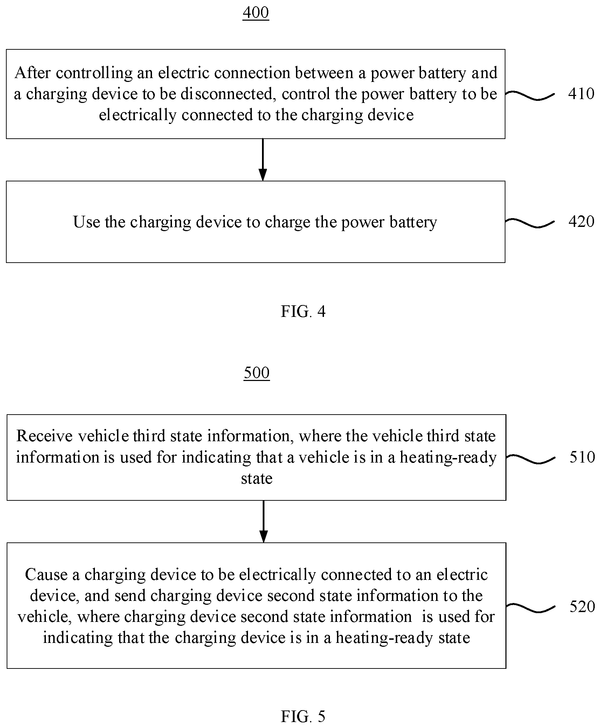

According to some embodiments of the present application, after step 220, the control method 200 further includes a process 400. Referring to FIG. 4, the process 400 includes:
Step 410: After the controlling an electrical connection between the power battery and the charging device to be disconnected, control the power battery to be electrically connected to the charging device.
Step 420: Use the charging device to charge the power battery.

When the power battery does not meet charging conditions, the electrical connection between the power battery and the charging device needs to be disconnected, and the power battery is heated. After heating is completed, when the power battery meets charging conditions, the electrical connection between the power battery and the charging device is restored. In the example shown in FIG. 1, when the power battery meets charging conditions, switches K5 and K6 are turned on to electrically connect the power battery to the charging device, allowing the charging device to start charging the power battery.

By disconnecting the electrical connection between the power battery and the charging device during the heating process of the power battery and restoring the electrical connection between the power battery and the charging device after heating is completed, charging can be performed after heating without disconnecting the physical connection between the charging device and the vehicle (for example, without unplugging the vehicle plug of the charging device from the vehicle socket of the vehicle), significantly reducing the complexity of the entire charging process.

According to some embodiments of the present application, the control method 200 further includes:
in response to a heating stop instruction, causing the electric energy module to stop applying the current to the power battery.

When the power battery requires heating, the electric energy module applies a current to the power battery to heat the power battery. After heating is completed, the electric energy module stops applying the current to the power battery.

When the vehicle or the charging device indicates that heating of the power battery should stop, the electric energy module stops applying the current to the power battery to cease heating the power battery, enabling the next operational phase (for example, pre-charging or energy transfer) to begin as soon as possible, improving operational efficiency.

According to some embodiments of the present application, the control method 200 further includes:
after causing the electric energy module to stop applying the current to the power battery, sending vehicle second state information to the charging device.

After heating of the power battery is completed, the vehicle second state information is sent to the charging device. In one example, the vehicle second state information may indicate that heating is completed, the vehicle state is ready, and it can enter the next phase. In some embodiments, the next phase may be a pre-charging phase.

Sending information indicating the vehicle state to the charging device enables the charging device to proceed to the next phase after the heating phase.

According to some embodiments of the present application, the electric energy module includes at least one of an energy storage module and a motor control module.

The electric energy module may be a separate energy storage module or the motor control module of the vehicle. In some embodiments, the motor control module may include a single electric drive generating current or dual electric drives generating current. Additionally, other modules generating current can be used to heat the power battery, without limitation.

The electric energy module can be selected based on the usage environment, improving adaptability to different use scenarios of different vehicles.

According to some embodiments of the present application, the bypass module includes at least one of a switch and a wire.

In some embodiments, the bypass module may take the form of a bypass circuit. There is at least one electrical connection point between the vehicle interface and switches K5 and K6, and this connection point is connected to a vehicle-side switch to form a bypass circuit. The bypass module may include a switch, a combination of a switch and a wire, or a single wire, cooperating with other switches to control the connection or disconnection of the electrical connection between the electric device and the charging device. In the example shown in FIG. 1, the bypass module includes switches K12 and K13.

The form of the bypass module can be configured based on the usage environment, improving adaptability to different vehicles.

According to some embodiments of the present application, the bypass module includes any one of the following:
a third switch configured to be electrically connected to a positive electrode of the charging device and a fourth switch configured to be electrically connected to a negative electrode of the charging device;
a fifth switch configured to be electrically connected to the positive electrode of the charging device and a first wire configured to be electrically connected to the negative electrode of the charging device;
a second wire configured to be electrically connected to the positive electrode of the charging device and a sixth switch configured to be electrically connected to the negative electrode of the charging device;
a seventh switch configured to be electrically connected to the positive electrode of the charging device;
an eighth switch configured to be electrically connected to the negative electrode of the charging device;
a third wire configured to be electrically connected to the positive electrode of the charging device; and
a fourth wire configured to be electrically connected to the negative electrode of the charging device.

The bypass module may consist of two switches respectively electrically connected to the positive and negative electrodes of the electric device, or one switch and one wire, or one wire cooperating with other switches to control the connection or disconnection of the electrical connection between the electric device and the charging device.

According to some embodiments of the present application, the electric device includes at least one of the following: an air conditioner compressor, a power converter, a heating film, a heat pump, and a positive temperature coefficient thermistor.

The electric device includes various forms of devices, such as an air conditioner compressor, a power converter, a heating film, a heat pump, and a positive temperature coefficient thermistor, without limitation.

The charging device can supply power to electric devices in the vehicle that require power. In some cases (for example, where the electric device is a heating film, a heat pump, or a positive temperature coefficient thermistor), the electric device can also assist in heating the power battery, thereby reducing heating time.

An embodiment of the present application provides a control method 500 for a charging device, where the charging device is configured to charge a vehicle, and the vehicle includes a power battery. Referring to FIG. 5, the control method 500 includes:
Step 510: Receive vehicle third state information, where the vehicle third state information is used for indicating that the vehicle is in a heating-ready state.
Step 520: Cause the charging device to be electrically connected to the electric device, and send charging device second state information to the vehicle, where the charging device second state information is used for indicating that the charging device is in a heating-ready state.

In one example, the vehicle third state information may be a "vehicle charging self-heating state_ready" message, indicating that the vehicle is in a heating-ready state, allowing heating of the power battery. Before the energy transfer phase, since the power battery does not permit charging, heating of the power battery is required. When the vehicle determines that it can enter heating mode, it sends the vehicle third state information to the charging device.

In one example, the charging device second state information may be a "charging device charging self-heating state_ready" message, indicating that the charging device is electrically connected to the electric device and can transfer energy to the vehicle.

After receiving the vehicle third state information, the charging device is electrically connected to the electric device. In the example shown in FIG. 1, after receiving the vehicle third state information, switches K1 and K2 are turned on to electrically connect the charging device to the electric device, and the charging device second state information is sent to the vehicle.

After receiving information indicating that the vehicle is ready, the charging device is electrically connected to the electric device and sends information indicating that the charging device is ready to the vehicle. Thus, through communication interaction between the charging device and the vehicle, the states of the charging device and the vehicle are confirmed, expanding the application scenarios of the charging device, enabling flexible utilization of the electrical energy of the charging device, and allowing subsequent implementation of the heating function for the power battery.

According to some embodiments of the present application, the control method 500 further includes:
before step 510, sending charging device first state information to the vehicle.

In a case that the charging device is physically connected to the vehicle, the heating process is initiated by the charging device, which sends the charging device first state information to the vehicle. In one example, the charging device first state information may be a "charging device charging self-heating state" message.

By initiating the heating process with the charging device and sending the charging device first state information to the vehicle, the safety and stability of the heating process can be improved.

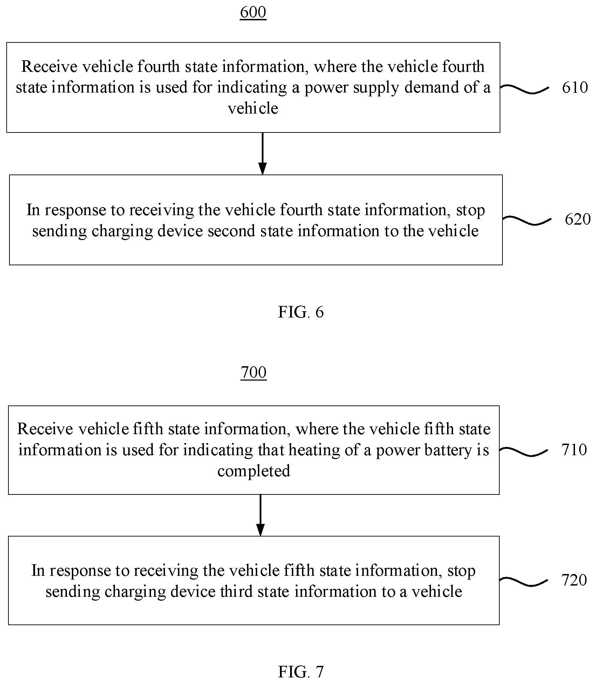

According to some embodiments of the present application, after step 520, the control method 500 further includes a process 600. Referring to FIG. 6, the process 600 includes:
Step 610: Receive vehicle fourth state information, where the vehicle fourth state information is used for indicating a power supply demand of the vehicle.
Step 620: In response to receiving the vehicle fourth state information, stop sending the charging device first state information to the vehicle.

In one example, the vehicle fourth state information may be a "vehicle power supply demand" message. After the charging device receives the vehicle fourth state information, it stops sending the charging device first state information to the vehicle.

During the heating phase, the charging device and the vehicle perform data interaction, and the charging device outputs energy based on the power supply demand of the vehicle, improving the reliability of the heating process.

According to some embodiments of the present application, the vehicle further includes an electric device, and after step 620, the control method 500 further includes:
after the stopping sending the charging device first state information to the vehicle, sending charging device third state information and charging device fourth state information to the vehicle, where the charging device third state information is used for indicating an output capability of the charging device, and the charging device fourth state information is used for indicating basic charging and heating information of the charging device.

In one example, the charging device third state information may be a "charging device dynamic output capability" message, indicating the output capability of the charging device. In one example, the charging device fourth state information may be a "charging device charging self-heating basic information" message, indicating basic information of the charging device during the heating phase.

While maintaining the physical connection between the charging device and the vehicle, the charging device supplies power to the electric device in the vehicle while heating the power battery. The charging device provides feedback on output capability information and basic heating process information to the vehicle, improving the reliability of the heating process.

According to some embodiments of the present application, the control method 500 further includes a process 700. Referring to FIG. 7, the process 700 includes:
Step 710: Receive vehicle fifth state information, where the vehicle fifth state information is used for indicating that heating of the power battery is completed.
Step 720: In response to receiving the vehicle fifth state information, stop sending the charging device third state information to the vehicle.

In one example, the vehicle fifth state information may be a "vehicle charging self-heating completed" message, indicating that heating of the power battery is completed and the power battery meets charging conditions. After receiving this information, the charging device stops sending the charging device third state information and stops transferring energy to the electric device. In one example, the charging device third state information may be a "charging device dynamic output capability" message, indicating the dynamic output capability of the charging device.

After receiving information indicating that heating of the power battery is completed, the charging device stops sending information indicating the output capability of the charging device and stops outputting energy, preparing to enter the next phase.

According to some embodiments of the present application, the control method 500 further includes:
before receiving the vehicle fifth state information, outputting, by the charging device, an output voltage corresponding to a power supply voltage demand value of the vehicle.

By outputting a voltage based on the power supply voltage demand value of the vehicle to meet the vehicle's power supply demand, the stability of the power supply process can be improved.

According to some embodiments of the present application, the control method 500 further includes:
before the receiving vehicle fifth state information, outputting, by the charging device, an output current not exceeding a current maximum power supply current demand value of the vehicle.

By ensuring that the output current of the charging device does not exceed the current maximum power supply current demand value of the vehicle, the reliability of the power supply process can be improved.

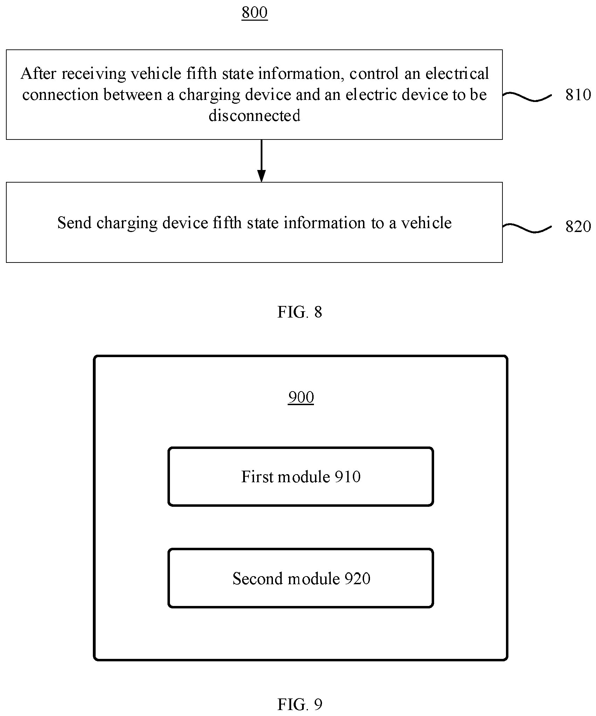

According to some embodiments of the present application, the control method 500 further includes a process 800. Referring to FIG. 8, the process 800 includes:
Step 810: After the receiving vehicle fifth state information, control an electrical connection between the charging device and the electric device to be disconnected.
Step 820: Send charging device fifth state information to the vehicle.

In the example shown in FIG. 1, after receiving the vehicle fifth state information, switches K1 and K2 are opened to disconnect the electrical connection between the charging device and the electric device.

In one example, the charging device fifth state information may be a "DC power supply circuit switch state" message, indicating the closed or open state of the switches on the charging device side.

After receiving the vehicle fifth state information indicating that heating of the power battery is completed, the electrical connection between the charging device and the electric device is disconnected, and the charging device fifth state information indicating that the electrical connection between the charging device and the electric device is disconnected is sent to the vehicle, preparing the vehicle for the next phase.

According to some embodiments of the present application, the control method 500 further includes:
monitoring an insulation resistance between a power supply circuit through which the charging device supplies power to the electric device and a device ground.

Since the insulation detection apparatus of vehicle is disconnected from the power supply circuit, the charging device's insulation detection apparatus needs to be used at this time to monitor the insulation resistance between the power supply circuit through which the charging device supplies power to the electric device and the device ground.

Using the charging device to perform insulation monitoring of the insulation resistance between the power supply circuit and the device ground improves the safety of the power supply process.

According to some embodiments of the present application, the charging device further includes a discharge circuit, and the control method 500 further includes:
before the sending charging device fifth state information to the vehicle, controlling the discharge circuit to perform discharging.

In the example of FIG. 1, before sending the charging device fifth state information to the vehicle, a discharge circuit (not shown in FIG. 1) is used to perform discharging. In one example, when the output current of the charging device drops to a predetermined current value, switches K1 and K2 are opened, and the discharge circuit is engaged to perform discharging. When the inner side voltage of switches K1 and K2 drops below a predetermined voltage (for example, 60 V), the discharge circuit is disconnected from the DC charging circuit.

In the example of FIG. 1, although not shown, the discharge circuit may include a discharge circuit connected across the inner sides of switches K1 and K2. In some embodiments, the discharge circuit may be provided outside the charging device, for example, by providing an aluminum shell resistor as a discharge resistor in the structure of the charging device. In some embodiments, the discharge circuit may also be provided inside the charging device, for example, by providing a chip resistor as a discharge resistor inside the charging device. When the discharge circuit switch is closed, the output voltage of the charging device is rapidly reduced through the discharge resistor, enabling the inner side voltage of switches K1 and K2 to drop below a predetermined voltage (for example, 60 V) within a certain time (for example, 1s) after the discharge circuit switch is closed.

After the charging device stops outputting, using the discharge circuit to discharge residual electricity improves the safety and reliability of the charging device.

According to some embodiments of the present application, the control method 500 further includes:
receiving vehicle second state information, where the vehicle second state information is used for indicating that the vehicle is in a charging-ready state.

When the vehicle permits charging, the vehicle sends the vehicle second state information to the charging device.

After the heating phase ends, the vehicle sends the vehicle second state information indicating that the vehicle is in a charging-ready state to the charging device, allowing the charging device to start charging the power battery. This enables heating the battery without disconnecting the physical connection between the charging device and the vehicle, and charging the battery after heating is completed.

According to some embodiments of the present application, the charging device includes a second switch module, where the second switch module is configured to electrically connect the charging device to the electric device, and step 520 includes: causing the second switch module to be turned on.

In the example shown in FIG. 1, the second switch module includes switches K1 and K2. When the bypass modules K12 and K13 are closed, the charging device closes switches K1 and K2 to electrically connect the charging device to the electric device.

By providing the second switch module within the charging device, the electrical connection between the charging device and the electric device can be controlled from the charging device side.

An embodiment of the present application provides a control apparatus 900 for a vehicle. Referring to FIG. 9, the control apparatus 900 includes a first module 910 and a second module 920.

The first module 910 is configured to, in a case that the vehicle is physically connected to a charging device, control the electric device to be electrically connected to the charging device to enable the charging device to supply power to the electric device.

The second module 920 is configured to, in a case that the vehicle is physically connected to the charging device, control an electrical connection between the power battery and the charging device to be disconnected.

The first module 910 and the second module 920 in the control apparatus 900 may respectively correspond to steps 210 and 220 in the method 200 shown in FIG. 2. For brevity, details are not repeated here. It should be understood that, corresponding to the embodiments of the method 200, the embodiments of the control apparatus 900 may include additional modules.

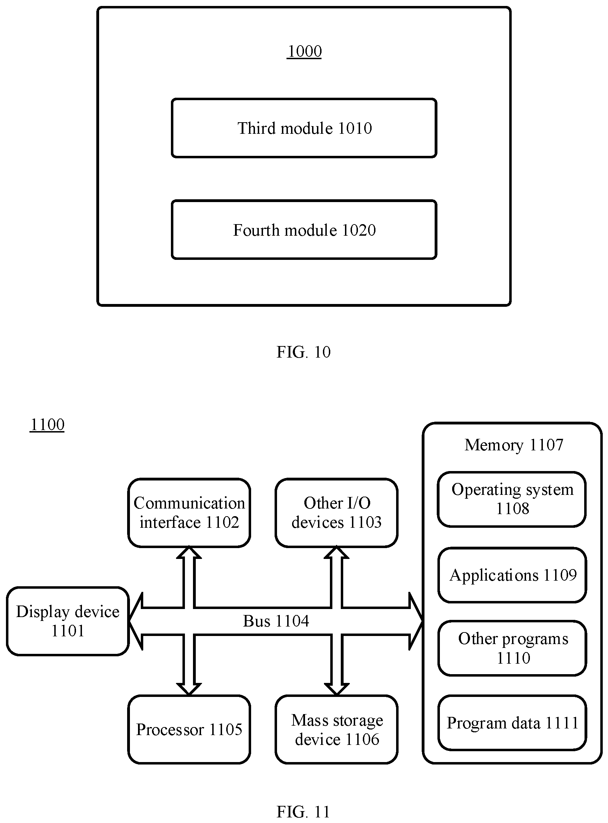

An embodiment of the present application provides a control apparatus 1000 for a charging device. Referring to FIG. 10, the control apparatus 1000 includes a third module 1010 and a fourth module 1020.

The third module 1010 is configured to receive vehicle third state information, where the vehicle third state information is used for indicating that the vehicle is in a heating-ready state.

The fourth module 1020 is configured to cause the charging device to be electrically connected to the electric device and send charging device second state information to the vehicle, where the charging device second state information is used for indicating that the charging device is in a heating-ready state.

The third module 1010 and the fourth module 1020 in the control apparatus 1000 for the charging device may respectively correspond to steps 510 and 520 in the method 500 shown in FIG. 5. For brevity, details are not repeated here. It should be understood that, corresponding to the embodiments of the method 500, the embodiments of the control apparatus 1000 may include additional modules.

It should be noted that the functions of the various modules discussed herein may be divided into multiple modules, and/or at least some functions of multiple modules may be combined into a single module. The execution of an action by a specific module discussed herein includes the specific module itself performing the action, or alternatively, the specific module invoking or otherwise accessing another component or module that performs the action (or performs the action in conjunction with the specific module). Thus, a specific module performing an action may include the specific module itself performing the action and/or another module invoked or otherwise accessed by the specific module to perform the action.

It should also be understood that the various techniques may be described in the general context of software-hardware components or program modules. The various modules described above with respect to FIG. 9 and FIG. 10 may be implemented in hardware or in hardware combined with software and/or firmware. For example, these modules may be implemented as computer program code/instructions configured to be executed in one or more processors and stored in a computer-readable storage medium. Alternatively, these modules may be implemented as hardware logic/circuits. The hardware logic/circuits may include an integrated circuit chip (including a processor (for example, a central processing unit (Central Processing Unit, CPU), a microcontroller, a microprocessor, or a digital signal processor (Digital Signal Processor, DSP), a memory, one or more communication interfaces, and/or one or more components in other circuits), and may execute received program code and/or include embedded firmware to perform functions in some embodiments.

An embodiment of the present application provides a computing device 1100, as shown in FIG. 11. FIG. 11 illustrates an example configuration of a computing device 1100 that can be used to implement the methods described herein. For example, the control apparatus 900 for the vehicle and the control apparatus 1000 for the charging device may be fully or at least partially implemented by the computing device 1100 or a similar device or system.

The computing device 1100 may include at least one processor 1105, a memory 1107, communication interface(s) 1102, a display device 1101, other input/output (I/O) devices 1103, and one or more mass storage devices 1106, capable of communicating with each other, such as via a system bus 1104 or other suitable connection. The memory 1107 stores an instruction, and when the instruction is executed by the processor 1105, cause the processor 1105 to perform the methods according to the above embodiments.

The computing device 1100 may be various types of devices. Examples of the computing device 1100 include, but are not limited to: desktop computers, server computers, laptops or netbooks, mobile devices (for example, tablets, cellular or other wireless phones (for example, smartphones), notebook computers, mobile stations), wearable devices (for example, glasses, watches), entertainment devices (for example, entertainment appliances, set-top boxes communicatively coupled to display devices, gaming consoles), televisions or other display devices, automotive computers, and the like.

The processor 1105 may be a single processing unit or multiple processing units, all of which may include single or multiple computing units or multiple cores. The processor 1105 may be implemented as one or more microprocessors, microcomputers, microcontrollers, digital signal processors, central processing units, state machines, logic circuits, and/or any devices that manipulate signals based on operational instructions. Among other capabilities, the processor 1105 may be configured to fetch and execute computer-readable instructions stored in the memory 1107, the mass storage device 1106, or other computer-readable media, such as program code of an operating system 1108, program code of applications 1109, program code of other programs 1110, and the like.

The memory 1107 and the mass storage device 1106 are examples of computer-readable storage media for storing instructions that are executed by the processor 1105 to implement the various functions described above. For example, the memory 1107 may generally include both volatile memory and non-volatile memory (for example, RAM or ROM). Additionally, the mass storage device 1106 may generally include hard disk drives, solid-state drives, removable media, including external and removable drives, memory cards, flash memory, floppy disks, optical disks (for example, CD, DVD), storage arrays, network-attached storage, storage area networks, and the like. The memory 1107 and the mass storage device 1106 may collectively be referred to herein as memory or computer-readable storage media, and may be non-transitory media capable of storing computer-readable, processor-executable program instructions as computer program code, which can be executed by the processor 1105 as a specific machine configured to implement the operations and functions described in the examples herein.

Multiple programs may be stored on the mass storage device 1106. These programs include an operating system 1108, one or more applications 1109, other programs 1110, and program data 1111, and they may be loaded into the memory 1107 for execution. Examples of such applications or program modules may include, for example, computer program logic (for example, computer program code or instructions) for implementing the following components/functions: the control apparatus 900 for the vehicle (including the first module 910 and the second module 920), the control apparatus 1000 for the charging device (including the third module 1010 and the fourth module 1020), the method 200 and/or the method 500 (including any suitable steps of the methods 200 and 500), and/or additional embodiments described herein.

Although illustrated in FIG. 11 as being stored in the memory 1107 of the computing device 1100, the operating system 1108, applications 1109, other programs 1110, and program data 1111, or portions thereof, may be implemented using any form of computer-readable media accessible by the computing device 1100.

One or more communication interfaces 1102 are used to exchange data with other devices, such as via a network, direct connection, and the like. Such communication interfaces may include one or more of the following: any type of network interface (for example, network interface card (NIC)), wired or wireless (such as IEEE 802.11 wireless LAN (WLAN)) wireless interface, Worldwide Interoperability for Microwave Access (Wi-MAX) interface, Ethernet interface, Universal Serial Bus (USB) interface, cellular network interface, BluetoothTM interface, Near Field Communication (NFC) interface, and the like. The communication interfaces 1302 may facilitate communication within various network and protocol types, including wired networks (for example, LAN, or cable) and wireless networks (for example, WLAN, cellular network, or satellite), the Internet, and the like. The communication interfaces 1102 may also provide communication with external storage devices (not shown), such as storage arrays, network-attached storage, storage area networks, and the like.

In some examples, a display device 1101, such as a monitor, may be included for displaying information and images to a user. Other I/O devices 1103 may be devices that receive various inputs from the user and provide various outputs to the user, and may include touch input devices, gesture input devices, cameras, keyboards, remote controls, mice, printers, audio input/output devices, and the like.

The techniques described herein may be supported by these various configurations of the computing device 1100 and are not limited to the specific examples of the techniques described herein. For example, the functions may also be fully or partially implemented on a "cloud" using a distributed system. The cloud includes and/or represents a platform for resources. The platform abstracts the underlying functionality of the hardware (for example, servers) and software resources of the cloud. The resources may include applications and/or data that can be used when performing computing processing on servers remote from the computing device 1100. The resources may also include services provided via the Internet and/or via subscriber networks such as cellular or Wi-Fi networks. The platform may abstract resources and functions to connect the computing device 1100 with other computing devices. Thus, the implementation of the functions described herein may be distributed throughout the cloud. For example, the functions may be partially implemented on the computing device 1100 and partially through a platform that abstracts the functions of the cloud.

An embodiment of the present application also provides a vehicle including: a power battery, an electric device, and the control apparatus 900 according to the above embodiment or the computing device 1100 according to the above embodiment.

In some embodiments, the vehicle is a new energy vehicle, and the new energy vehicle may be a battery electric vehicle, a hybrid vehicle, or an extended-range vehicle, and the like. The vehicle is internally provided with a power battery, an electric device, and the control apparatus 900 according to the above embodiment or the computing device 1100 according to the above embodiment. For brevity, details are not repeated here.

An embodiment of the present application also provides a charging device configured to charge a vehicle, where the vehicle includes a power battery and an electric device, the charging device including: the control apparatus 1000 according to the above embodiment or the computing device 1100 according to the above embodiment.

In some embodiments, the charging device may include an off-board conductive charger. The charging device includes the control apparatus 1000 according to the above embodiment or the computing device 1100 according to the above embodiment. For brevity, details are not repeated here.

An embodiment of the present application also provides a computer-readable storage medium storing an instruction, and when the instruction is executed by a processor, cause the processor to perform the method according to any one of the above embodiments.

The computer-readable storage medium includes volatile and non-volatile, removable and non-removable media implemented by any method or technology for storing information, such as computer-readable instructions, data structures, program modules, or other data. Computer-readable storage media include, but are not limited to, RAM, ROM, EEPROM, flash memory or other memory technologies, CD-ROM, digital versatile disk (DVD), or other optical storage devices, magnetic cassettes, magnetic tapes, magnetic disk storage or other magnetic storage devices, or any other non-transmission medium that can be used to store information for access by a computing device.

An embodiment of the present application also provides a computer program product including an instruction, and when the instruction is executed by a processor, cause the processor to perform the method according to any one of the above embodiments.

A specific embodiment of the present application is described below. It should be understood that this specific embodiment is described for illustrative purposes only and should not be construed as limiting the present application.

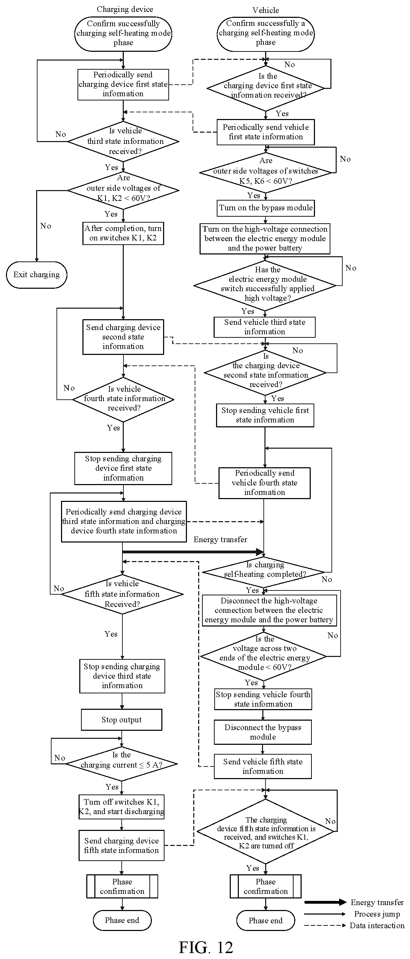

As shown in FIG. 1 and FIG. 12, after the vehicle connector is inserted into the vehicle socket, the charging device and the vehicle each confirm the charging self-heating phase. After successful confirmation, the charging device initiates the charging self-heating process and periodically sends charging device first state information to the vehicle.

After receiving the charging device first state information, the vehicle periodically sends the vehicle first state information to the charging device. The outer side voltage of switches K5 and K6 is detected, and when the outer side voltage is less than 60 V, the switches K12 and K13 of the bypass module are turned on to electrically connect the electric device to the charging device. The electric device may be a heating device such as an air conditioner compressor, a power converter, a heating film, a heat pump, or a positive temperature coefficient thermistor to assist in heating the battery, thereby reducing the battery heating time. After turning on switches K12 and K13, the electric energy module is connected to the power battery at high voltage. After the electric energy module switch successfully applies high voltage, vehicle third state information is sent, indicating that the vehicle is in a heating-ready state, allowing heating of the power battery.

After receiving the vehicle third state information, the charging device detects the outer side voltage of switches K1 and K2. When the outer side voltage is less than 60 V, switches K1 and K2 are turned on to electrically connect the charging device to the electric device. The charging device second state information is sent to the vehicle, indicating that the charging device is in a heating-ready state, and the charging device is electrically connected to the electric device, enabling energy transfer to the vehicle.

After receiving the charging device second state information, the vehicle stops sending the vehicle first state information and periodically sends vehicle fourth state information to the charging device, indicating the power supply demand of the vehicle.

After receiving the vehicle fourth state information, the charging device stops sending the charging device first state information to the vehicle and periodically sends the charging device third state information indicating the output capability of the charging device and the charging device fourth state information indicating basic charging and heating information of the charging device to the vehicle.

The vehicle turns off switches K5 and/or K6 to disconnect the electrical connection between the power battery and the charging device and disconnects the electrical connection between the power battery and the electric device. The electric energy module applies a current to the power battery to heat the power battery. At this time, the power battery is not connected to the charging device but is connected to the electric energy module. By applying a positive current or negative current across the power battery through the electric energy module, the battery is rapidly heated through its internal resistance. The electric energy module may be a separate energy storage module or the motor control module of the entire vehicle is used as the electric energy module. In some embodiments, the motor control module may include a single electric drive generating current or dual electric drives generating current. Additionally, other modules generating current may be used to heat the power battery.

The charging device outputs energy to the vehicle to supply power to the electric device in the vehicle. At this time, since the power battery is not electrically connected to the charging device, the charging device does not charge the power battery.

When it is determined that the charging self-heating is completed, the electric energy module stops applying the current to the power battery and disconnects the electrical connection between the electric energy module and the power battery. The voltage across the electric energy module is detected, and when the voltage across both ends is less than 60 V, the vehicle stops sending the vehicle fourth state information to the charging device, turns off switches K12 and K13, and sends vehicle fifth state information to the charging device, indicating that heating of the power battery is completed.

After receiving the vehicle fifth state information, the charging device stops sending the charging device third state information and stops outputting energy. The charging device monitors the charging current, and when the charging current is less than or equal to 5A, switches K1 and K2 are turned off, and the discharge circuit is controlled to perform discharging. The charging device fifth state information is sent to the vehicle, indicating that switches K1 and K2 are turned off.

The charging device and the vehicle each confirm the phase, and when it is determined that the charging self-heating phase has ended, the next phase is entered, which may be a pre-charging phase.

The charging device receives the vehicle second state information indicating that the vehicle is in a charging-ready state and starts charging the power battery.

It should be noted that the above embodiments are only used to illustrate the technical solutions of the present application and not to limit them. Although the present application has been described in detail with reference to the foregoing embodiments, those of ordinary skill in the art should understand that modifications can still be made to the technical solutions described in the foregoing embodiments, or equivalent substitutions can be made to some or all of the technical features therein. Such modifications or substitutions do not cause the essence of the corresponding technical solutions to depart from the scope of the technical solutions of the embodiments of the present application, and they should be included within the scope of the claims and specification of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. A control method for a vehicle, wherein the vehicle comprises a power battery and an electric device, and the control method comprises:
in a case that the vehicle is physically connected to a charging device:
controlling the electric device to be electrically connected to the charging device, so that the charging device supplies power to the electric device; and
controllingan electrical connection between the power battery and the charging device to be disconnected.

2. The control method according to claim 1, wherein the vehicle further comprises a bypass module, and the bypass module is configured to connect or disconnect the electric device to or from the charging device.

3. The control method according to claim 1 or 2, wherein in a case that the electric device is electrically connected to the charging device, an electrical connection between the electric device and the power battery is disconnected.

4. The control method according to any one of claims 1 to 3, wherein the controlling an electrical connection between the power battery and the charging device to be disconnected comprises:
in a case that the electric device is electrically connected to the charging device, controlling the electrical connection between the power battery and the charging device to be disconnected.

5. The control method according to any one of claims 1 to 4, wherein the vehicle further comprises an electric energy module, and the control method further comprises:
after the controllingan electrical connection between the power battery and the charging device to be disconnected, making the electric energy module apply a current to the power battery to heat the power battery.

6. The control method according to any one of claims 1 to 5, wherein the vehicle further comprises a first switch module, the first switch module is configured to electrically connect the power battery to the charging device, and the controlling an electrical connection between the power battery and the charging device to be disconnected comprises:
causing the first switch module to be turned off.

7. The control method according to claim 6, wherein the first switch module comprises a first switch and a second switch, the first switch and the second switch are respectively electrically connected to a positive electrode and a negative electrode of the power battery, and the controlling an electrical connection between the power battery and the charging device to be disconnected comprises:
causing at least one of the first switch and the second switch to be turned off..

8. The control method according to any one of claims 1 to 7, wherein the vehicle further comprises an on-board insulation detection apparatus, and during a period when the electric device is electrically connected to the charging device, an electrical connection between the on-board insulation detection apparatus and a power supply circuit through which the charging device supplies power to the electric device is disconnected.

9. The control method according to any one of claims 6 to 8, wherein the controlling the electric device to be electrically connected to the charging device comprises:
in response to an outer side voltage of the first switch module being less than a first voltage threshold, causing the electric device to be electrically connected to the charging device via the bypass module.

10. The control method according to claim 9, wherein the first voltage threshold is 60 V.

11. The control method according to any one of claims 1 to 10, further comprising:
before the controlling the electric device to be electrically connected to the charging device, receiving charging device first state information from the charging device; and
in response to receiving the charging device first state information, sending vehicle first state information to the charging device.

12. The control method according to any one of claims 1 to 11, further comprising:
after the controlling an electrical connection between the power battery and the charging device to be disconnected, controlling the power battery to be electrically connected to the charging device; and
using the charging device to charge the power battery.

13. The control method according to any one of claims 5 to 12, further comprising:
in response to a heating stop instruction, causing the electric energy module to stop applying the current to the power battery.

14. The control method according to claim 13, further comprising:
after causing the electric energy module to stop applying the current to the power battery, sending vehicle second state information to the charging device.

15. The control method according to any one of claims 5 to 14, wherein the electric energy module comprises at least one of an energy storage module and a motor control module.

16. The control method according to any one of claims 2 to 15, wherein the bypass module comprises at least one of a switch and a wire.

17. The control method according to claim 16, wherein the bypass module comprises any one of the following:
a third switch configured to be electrically connected to a positive electrode of the charging device and a fourth switch configured to be electrically connected to a negative electrode of the charging device;
a fifth switch configured to be electrically connected to the positive electrode of the charging device and a first wire configured to be electrically connected to the negative electrode of the charging device;
a second wire configured to be electrically connected to the positive electrode of the charging device and a sixth switch configured to be electrically connected to the negative electrode of the charging device;
a seventh switch configured to be electrically connected to the positive electrode of the charging device;
an eighth switch configured to be electrically connected to the negative electrode of the charging device;
a third wire configured to be electrically connected to the positive electrode of the charging device; and
a fourth wire configured to be electrically connected to the negative electrode of the charging device.

18. The control method according to any one of claims 1 to 17, wherein the electric device comprises at least one of the following: an air conditioner compressor, a power converter, a heating film, a heat pump, and a positive temperature coefficient thermistor.

19. A control method for a charging device, wherein the charging device is configured to charge a vehicle, the vehicle comprises a power battery and an electric device, and the control method comprises:
receivingvehicle third state information, wherein the vehicle third state information is used for indicating that the vehicle is in a heating-ready state; and
causing the charging device to be electrically connected to the electric device, and sending charging device second state information to the vehicle, wherein the charging device second state information is used for indicating that the charging device is in a heating-ready state.

20. The control method according to claim 19, further comprising:
before the receiving vehicle third state information, sending charging device first state information to the vehicle.

21. The control method according to claim 20, further comprising:
receiving vehicle fourth state information, wherein the vehicle fourth state information is used for indicating a power supply demand of the vehicle; and
in response to receiving the vehicle fourth state information, stopping sending the charging device first state information to the vehicle.

22. The control method according to claim 21, wherein the control method further comprises:
after the stopping sending the charging device first state information to the vehicle, sending charging device third state information and charging device fourth state information to the vehicle, wherein the charging device third state information is used for indicating an output capability of the charging device, and the charging device fourth state information is used for indicating basic charging and heating information of the charging device.

23. The control method according to claim 22, further comprising:
receiving vehicle fifth state information, wherein the vehicle fifth state information is used for indicating that heating of the power battery is completed; and
in response to receiving the vehicle fifth state information, stopping sending the charging device third state information to the vehicle.

24. The control method according to claim 23, further comprising:
before the receiving vehicle fifth state information, outputting, by the charging device, an output voltage corresponding to a power supply voltage demand value of the vehicle.

25. The control method according to claim 23 or 24, further comprising:
before the receiving vehicle fifth state information, outputting, by the charging device, an output current not exceeding a current maximum power supply current demand value of the vehicle.

26. The control method according to any one of claims 23 to 25, further comprising:
after the receiving vehicle fifth state information, controlling an electrical connection between the charging device and the electric device to be disconnected; and
sending charging device fifth state information to the vehicle.

27. The control method according to any one of claims 19 to 26, further comprising:
monitoring an insulation resistance between a power supply circuit through which the charging device supplies power to the electric device and a device ground.

28. The control method according to claim 26 or 27, wherein the charging device further comprises a discharge circuit, and the control method further comprises:
before the sending charging device fifth state information to the vehicle, controlling the discharge circuit to perform discharging.

29. The control method according to any one of claims 19 to 28, further comprising:
receiving vehicle second state information, wherein the vehicle second state information is used for indicating that the vehicle is in a charging-ready state.

30. The control method according to any one of claims 19 to 29, wherein the charging device comprises a second switch module, wherein the second switch module is configured to electrically connect the charging device to the electric device, and the causing the charging device to be electrically connected to the electric device comprises:
causing the second switch module to be turned on.

31. A control apparatus for a vehicle, wherein the vehicle comprises a power battery and an electric device, and the control apparatus comprises:
a first module configured to, in a case that the vehicle is physically connected to a charging device, control the electric device to be electrically connected to the charging device, wherein the charging device supplies power to the electric device; and
a second module configured to, in a case that the vehicle is physically connected to the charging device, control an electrical connection between the power battery and the charging device to be disconnected.

32. A control apparatus for a charging device, wherein the charging device is configured to charge a vehicle, the vehicle comprises a power battery and an electric device, and the control apparatus comprises:
a third module configured to receive vehicle third state information, wherein the vehicle third state information is used for indicating that the vehicle is in a heating-ready state; and
a fourth module configured to cause the charging device to be electrically connected to the electric device and send charging device second state information to the vehicle, wherein the charging device second state information is used for indicating that the charging device is in a heating-ready state.

33. A computing device comprising:
at least one processor; and
at least one memory communicatively connected to the at least one processor, wherein the at least one memory stores an instruction, when the instruction is executed individually or collectively by the at least one processor, the computing device is made to perform the control method according to any one of claims 1 to 18 and the control method according to any one of claims 19 to 30.

34. A vehicle comprising a power battery, an electric device, and the control apparatus according to claim 31 or the computing device according to claim 33.

35. A charging device configured to charge a vehicle, wherein the vehicle comprises a power battery and an electric device, and the charging device comprises the control apparatus according to claim 32 or the computing device according to claim 33.

36. A computer-readable storage medium storing an instruction, and when the instruction is executed individually or collectively by one or more processors of a computing device, the computing device is caused to perform the control method according to any one of claims 1 to 18 and the control method according to any one of claims 19 to 30.

37. A computer program product comprising an instruction, and when the instruction is executed individually or collectively by one or more processors of a computing device, the computing device is caused to perform the control method according to any one of claims 1 to 18 and the control method according to any one of claims 19 to 30.
